# EUROPEAN PATENT APPLICATION

(11) **EP 4 272 893 A1**
(43) Date of publication of application: **08.11.2023**
(21) Application number: 23170674.8
(22) Date of filing: 28.04.2023
(51) Int. Cl.: B23Q 1/03, B23Q 17/00, B23Q 17/12

(54) **MOBILE ELEMENT FOR BLOCKING WORKPIECES TO BE WORKED FOR DETECTING AT LEAST ITS MOVEMENT AND ITS ORIENTATION IN A WORKING CENTER FOR MACHINING WORKPIECES, AND RELATED DETECTION METHOD**

(30) Priority: 06.05.2022 IT 202200009356
(71) Applicant: SCM Group S.p.A., 47921 Rimini (RN) (IT)
(72) Inventor: GESSI, Luca, 47921 Rimini (RN) (IT); MAZZA, Luca, 47921 Rimini (RN) (IT); BERTUCCIOLI, Alessandro, 47921 Rimini (RN) (IT)
(74) Representative: Tiburzi, Andrea

(57) **Abstract**

The present invention relates to a movable element (24_{a,b},...,ₖ,...ₙ) for blocking workpieces, couplable to a working plane (2) comprised in a working center (C) for working pieces made of wood, ceramic, plastic, glass, fiberglass, comprising a detecting and processing unit (D_{a,b},...,ₖ,...ₙ) configured for: detecting at least one acceleration value of said movable element (24_{a,b},...,ₖ,...ₙ) along at least one axis of a Cartesian reference tern (X,Y,Z); and comparing said at least one acceleration value with a reference acceleration threshold (S1).

The present invention also relates to a working center (C) for machining pieces of wood, ceramic, plastic, glass, fiberglass.

The present invention also relates to a method (5) for detecting at least one movement and orientation of a movable element (24_{a,b},...,ₖ,...ₙ), for clamping workpieces.

## Description

The present invention relates to a movable element for blocking pieces to be worked, improved for detecting at least its movement and orientation in a working center for working pieces made of wood, ceramic, plastic, glass, fiberglass, and the like.

The present invention also relates to a working center for machining pieces made of wood, ceramic, plastic, glass, fiberglass, and the like, provided with said improved movable element.

The present invention also relates to an improved method for detecting at least one movement and orientation of said movable element with respect to said working center.

### Field of the invention

More specifically, the invention relates to a movable element designed and manufactured in particular to detect at least its movement and orientation in a numerically controlled working center for machining wood, ceramic, plastic, glass, fiberglass, and the like.

In the following, the description will be addressed to a numerically controlled working center equipped with support bars, for the machining of wooden panels but it is quite clear that the same should not be considered limited to this specific use.

### Prior art

Numerically controlled working centers are known which carry out milling and drilling mainly on wood and on materials with similar physical characteristics.

In particular, said working centers comprise a working plane, on which the pieces to be machined are fixed, and one or more operating units equipped with work units, capable of having up to 5 interpolating axes.

These working centers are equipped with magazines and automatic systems for replacing the tools, making the machining process of the pieces completely automatic.

The working plane comprises a plurality of bars, on which sucking cups or clamps are slidably coupled, suitable for fixing the workpiece.

These bars are provided with ducts for feeding the vacuum, necessary to block the pieces on the suction cups.

Up to six suction cups or clamps can be mounted on each bar of a manual bar table, which can be removed and then freely repositioned, according to the work to be performed on the workpiece.

Typically, each sucking cup comprises a plurality of electronic components and is powered by one or more batteries included therein.

The electronic components of the suction cup include: an accelerometer, at least one microcontroller, an optical sensor, and a plurality of LEDs to provide indications to the user on the operating state of the suction cup.

Currently, the suction cups are positioned manually or automatically on the bars to carry out the required machining.

However, a drawback of known types of sucking cups is that the electronic components of the sucking cup are always active regardless of whether the sucking cup is correctly positioned on the respective bar or not. For example, the electronic components of the suction cup remain active even if the suction cup is taken from the respective bar to be transported to the working center warehouse. This leads to high energy consumption and, therefore, a short life cycle for the electronic components of the suction cup.

A further drawback of known types of sucking cups is given by the fact that false positives may occur if the accelerometer detects movement and orientation values of the sucking cup identical to the values expected for positioning the sucking cup on the respective bar but the sucking cup is in a different position than the position on the bar. Also in this case, this entails a high energy consumption, since the electronic components of the suction cup are activated but the suction cup is not in an operative position.

### Scope of the invention

In light of the above, it is, therefore, an object of the present invention to overcome the disadvantages mentioned above by providing an improved movable element for clamping workpieces to detect at least its movement and its orientation in a working center.

Another object of the invention is to provide an improved workpiece clamping movable element that is capable of providing the user with data associated with its position relative to the bar to which it is coupled, thereby reducing the occurrence of a false positive in the detection of the position data.

A further object of the invention is to provide an improved movable element for clamping workpieces that is capable of comparing the movement values detected with a predetermined threshold so as to prevent any breakages or malfunctions of the improved movable element.

Another object of the invention is to provide an improved movable element for clamping workpieces that is capable of comparing the movement values detected with a further predetermined threshold to verify that a machining operation has actually been carried out, determining the start and end of this process.

Another object of the invention is to provide an improved movable element for clamping workpieces to detect at least its movement and its orientation with respect to a working center which is highly reliable, relatively simple to make, and at competitive costs if compared to the prior art.

A further object of the present invention is to provide the tools necessary for carrying out the method and the apparatuses, which carry out this method.

### Object of the invention

It is, therefore, specific object of the present invention a movable element for blocking workpieces, couplable to a working plane comprised in a working center for working pieces made of wood, ceramic, plastic, glass, fiberglass, comprising a detecting and processing unit configured for: detecting at least one acceleration value of said movable element along at least one axis of a Cartesian reference tern; and comparing said at least one acceleration value with a reference acceleration threshold.

Advantageously according to the invention, said movable element may be couplable to a working plane sliding on a respective supporting bar, wherein said movable element is capable of switching from an energy-saving configuration to an active configuration, based on said comparison between said at least one acceleration value and said reference acceleration threshold.

Always according to the invention, said detecting and processing unit may be is configured for: predefining a reference direction parallel to the gravity acceleration vector; detecting an acceleration value of said movable element along said predefined reference direction; comparing said detected acceleration value of said movable element along said reference direction with the gravity acceleration value if said acceleration value of said movable element along said predefined reference direction is different from said gravity acceleration value, maintaining said movable element in said energy-saving configuration, if said acceleration value of said movable element along said predefined reference direction is substantially equal to said gravity acceleration value, acquiring at least one image and/or video, processing said at least one image and/or video, verifying the presence of said code in said processed image and/or video, so that if said code is not detected in said image and/or video, maintaining said movable element in said energy-saving configuration, if said code is detected in said image and/or video, switching the state of said movable element from said energy-saving configuration to said active configuration.

Still according to the invention, said detecting and processing unit may comprise: an accelerometer for detecting said at least one acceleration value of said movable element; a first microcontroller, connected to said accelerometer and configured for determining the acceleration of said movable element based on said at least one acceleration value received from said accelerometer, determining the orientation of said movable element based on said acceleration value of said movable element along said predefined reference direction.

Conveniently according to the invention, said detecting and processing unit may comprise a data acquisition device for detecting said at least one image and/or video; a second microcontroller, connected to said data acquisition device, for processing said at least one image and/or video, and for checking the presence of at least one code in said processed image and/or video, so as to maintain said movable element in said energy-saving configuration or to switch the state of said movable element from said energy-saving configuration to said active configuration based on said check.

Still according to the invention, the detecting and processing unit may comprise a first light source, operatively connected to said data acquisition device and to said second microcontroller, wherein said first light source is capable of lighting said second code arranged on the respective supporting bar for the time period necessary for said data detection device for detecting said at least one image and/or video.

Advantageously according to the invention, said detecting and processing unit may comprise a second light source, operatively connected to said accelerometer device and to said first microcontroller, wherein said second light source is capable of being activated to guide the operator in positioning the movable element on the respective second light source bar.

Always according to the invention, said accelerometer may be a triaxial accelerometer.

Still according to the invention, said movable element may comprise a main body having a supporting surface, on which said workpiece can be placed, and a resting surface, intended to be placed on the supporting bar.

Always according to the invention, said first microcontroller may be configured to compare said at least one acceleration value detected by said accelerometer during the operation, with a reference acceleration threshold, such that if said at least one acceleration value detected by said accelerometer exceeds said reference acceleration threshold, said first microcontroller detects an anomaly and sends a command signal to a control logic unit of said working center to interrupt said operation and/or sends an audio and/or acoustic alarm signal to the operator, or if said at least one acceleration detected value by said accelerometer does not exceed said reference acceleration threshold, said first microcontroller does not detect any anomaly.

Conveniently according to the invention, said first microcontroller may be configured for comparing said at least one acceleration value detected by said accelerometer during said operation, with a reference acceleration threshold, such that if said at least one acceleration value detected by said accelerometer exceeds said reference acceleration threshold, said first microcontroller detects that said operation has not been performed and sends an acoustic and/or sound alarm signal to the operator, or if said at least one acceleration value detected by said accelerometer does not exceed said reference acceleration threshold, said first microcontroller detects that said operation has been correctly performed and determines the beginning and the end of said operation.

Still according to the invention, said detecting and processing unit may comprise storage means as a database, and are configured for storing acceleration values detected by said accelerometer, data detected by said acquisition device and said reference thresholds.

It is also object of the present invention a working center for working workpieces made of wood, ceramic, plastic, glass, fibreglass, comprising: a base for supporting said working center; a working unit comprising at least one working head supporting at least one working tool; a working plane, coupled to said base, for supporting the workpieces, a control logic unit for the operation of said working center, in which are stored configurations of said working plane for working said workpieces; said working center being characterized in that said worktable comprises a plurality of movable elements for blocking workpieces according to the present invention.

It is also object of the present invention a method for detecting at least one movement and orientation of a movable element for blocking workpieces comprised in a working center for working piece made of wood, ceramic, plastic, glass, fibreglass, wherein said movable element comprises a detecting and processing unit, wherein said method comprises the following steps: detecting, by means of said detecting and processing unit, at least one acceleration value of said movable element along at least one axis of a Cartesian reference tern; and comparing, by means of said detecting and processing unit, said at least one acceleration value with a reference acceleration threshold.

Still according to the invention, said method may comprise the following further steps: predefining, by means of said detection and processing unit, a reference direction parallel to the gravity acceleration vector; detecting, by means of said detection and processing unit, an acceleration value of said movable element along said predefined reference direction; comparing, by means of said detection and processing unit, said detected acceleration value of said movable element along said predefined reference direction with the gravity acceleration value if said acceleration value of said movable element along said predefined reference direction is different from said gravity acceleration value, maintaining said movable element in said energy-saving configuration, if said acceleration value of said movable element along said predefined reference direction is substantially equal to said gravity acceleration value detecting at least one image and/or video, processing said at least one image and/or video, checking the presence of said code in said processed image and/or video, such that if said code is not detected in said image and/or video, maintain said movable element in said energy-saving configuration, if said code is detected in said image and/or video, switching the state of said movable element from said energy-saving configuration to said active configuration.

### Brief description of the figures

The present invention will be now described, for illustrative but not limitative purposes, according to its preferred embodiments, with particular reference to the figures of the enclosed drawings, wherein:
figure 1 shows, in a side perspective view, an embodiment of a working center provided with at least one improved movable element for clamping the workpieces, according to the present invention;
figure 2 shows, in a perspective view and in detail, a base and a working plane of the working center according to the present invention;
figure 3A shows, in a top perspective view, an embodiment of the improved workpiece clamping movable element according to the present invention;
figure 3B shows, in a perspective view from below, the improved workpiece clamping movable element of figure 3A;
figure 4 shows a partially exploded view of the improved workpiece clamping movable element of figure 3A;
figure 5 shows, in a schematic view, an embodiment of a detection unit included in the improved movable element for clamping workpieces of figure 3A; and
figure 6 is a flowchart showing an embodiment of the method for detecting at least one movement and orientation of the improved movable element for clamping of workpieces with respect to the working center.

In the various figures, similar parts will be indicated with the same reference numbers.

### Detailed description

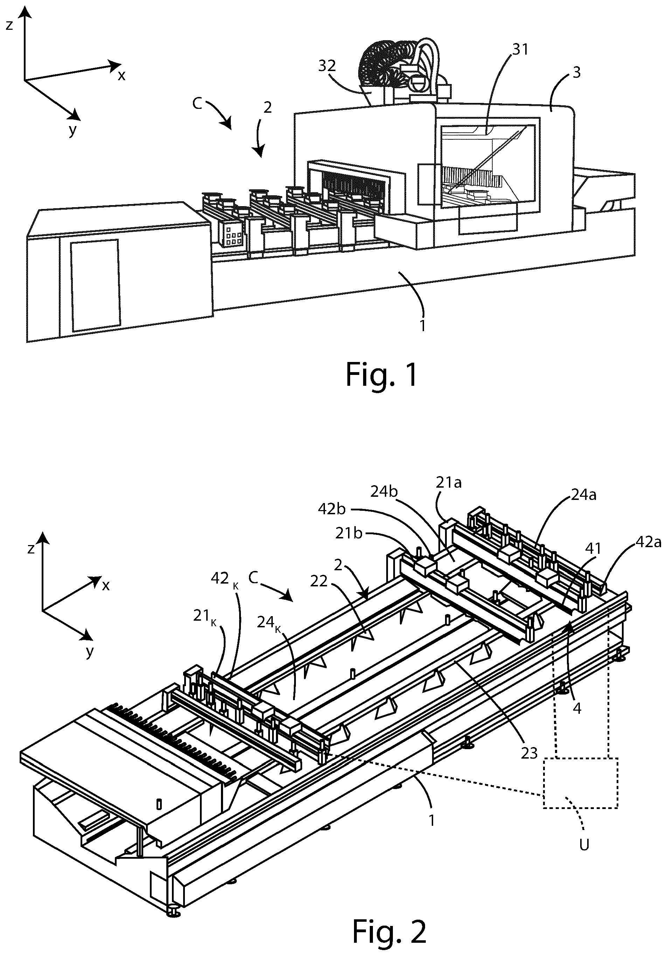

With reference to figure 1, an embodiment of the working center for machining pieces made of wood, ceramic, plastic, glass, fiberglass and the like, according to the present invention, can be observed, indicated as a whole with the reference letter C.

The working center C comprises a base 1, through which said working center C rests on the ground, a working plane 2, for supporting the pieces to be worked, such as panels and the like, a working unit 3 equipped with a working head 32 arranged on a crosspiece 31, in which said working head 32 supports workpiece machining tools, a logic control unit U and a measurement system 4.

In the embodiment shown, the support plane 2 is a bar plane. In other embodiments, the support surface 2 can be a multifunctional surface. By multifunctional plane we mean a continuous plane used for workings that do not pass through in the vertical direction, provided with openings or holes, through which a vacuum system acts in one or more specific portions of the multifunctional working plane itself, delimited by gaskets. Should the need arise to carry out through machining, movable elements 24 will be mounted on this multifunctional surface _{a,b,...k,...n}, like sucking cups, which will be fixed to the surface through the vacuum present in the openings of the multifunctional surface, which will guarantee both the fixing of the movable element 24_{a,b,...k,...n} to the surface, and the fixing of the piece to be worked on the movable element 24_{a,b,...k,...n}.

The base 1 has an elongated shape, the main dimension of which mainly extends according to a development direction parallel to the axis indicated by X of a Cartesian reference system or Cartesian reference triad XYZ.

Said crosspiece 31 is slidably coupled to said base 1 along said X direction, and said working head 32 is slidably coupled to said crosspiece 31 in said Y direction. Said working head is also movable along a third direction Z, orthogonal to said directions X and Y. Said working head 32 can also rotate around one, two or three or more axes of rotation.

The working plane 2 is coupled to said base 1 and this too has an elongated shape, the main dimension of which extends mainly in a development direction parallel to the X axis.

In particular, in the present embodiment, the working plane 2 comprises a plurality of support bars 21_{a,b,...k,...n}, which are slidingly coupled to said base 1 by means of a first 22 and a second 23 guide, integral with said base 1.

Said plurality of support bars 21_{a,b,...k,...n} can be operated manually by an operator or automatically by means of a movement unit (not shown in the figures), along said first 22 and second 23 guide of said base 1, according to the X axis.

As can be seen from figure 2, each support bar 21ₖ of said plurality of support bars 21_{a,b,...k,...n} is arranged aligned in a direction parallel to an axis orthogonal to the X axis, denoted by Y.

Said plurality of support bars 21_{a,b,...k,...n} it is suitable for supporting the pieces to be machined.

On each support bar 21ₖ it is smoothly mounted a plurality of movable elements 24_{a,b,...k,...n} as sucking cups or clamps, for blocking the pieces to be machined, by means of vacuum systems, during the machining of the piece by said working unit. Furthermore, these movable elements 24_{a,b,...k,...n} also allow releasing the pieces to be machined at the end of the process.

Said plurality of movable elements 24_{a,b,...k,...n} can be operated manually by the operator or automatically by means of the movement unit, along respective bars of said plurality of support bars 21_{a,b,...k,...n}, according to the Y axis.

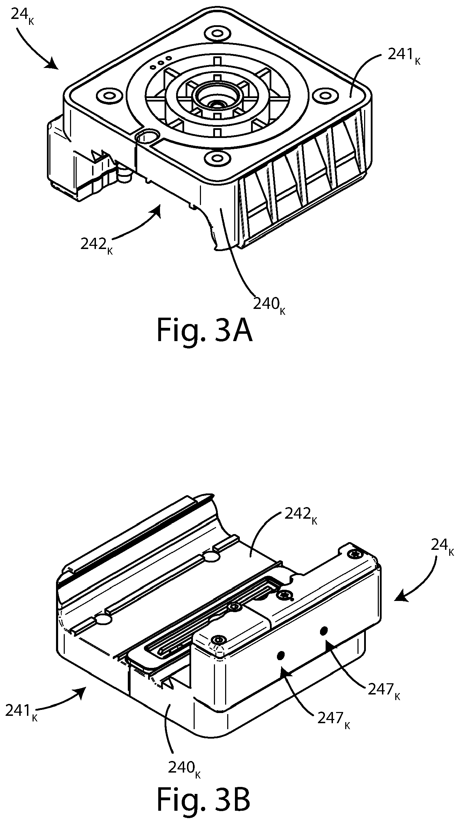

As can be seen in particular from figures 3A and 3B, each movable element 24ₖ includes a main body 240ₖ.

The main body 240ₖ according to the present invention is hollow and has a substantially square section. However, in further embodiments said main body 240ₖ can have a different section from what is described such as, for example, a circular or rectangular section.

More specifically, said main body 240ₖ comprises a support surface 241ₖ, on which said workpiece can be placed, and a support surface 242ₖ, intended to be placed on the support bar 21ₖ.

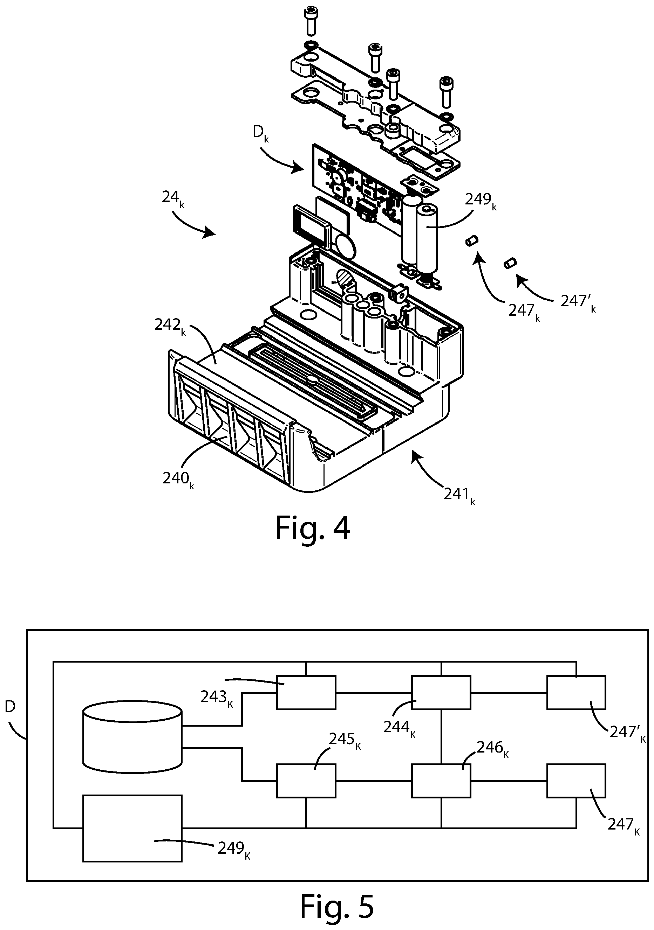

As can be seen in figure 4, in the embodiment being described, each movable element 24ₖ comprises a respective detection and processing unit Dₖ housed in one end of said main body 240ₖ.

In the present embodiment, said detection and processing unit Dₖ comprises:
- a accelerometer 243ₖ;
- a first microcontroller 244ₖ, connected to said accelerometer 243ₖ;
- a data acquisition device 245ₖ;
- a second microcontroller 246ₖ, connected to said data acquisition device 245ₖ and to said first microcontroller 244ₖ;
- a first light source 247ₖ;
- a second light source 247'ₖ;
- storage media 248ₖ, connected to said accelerometer 243ₖ and to said acquisition device 245ₖ; and
- supply means 249ₖ.

The accelerometer 243ₖ is capable of acquiring acceleration data concerning acceleration/deceleration values of said movable element 24ₖ.

More specifically, said accelerometer 243ₖ allows measuring the vibrations or the acceleration of said movable element 24ₖ relative to the object on which it is placed.

There is an acceleration of said movable element 24ₖ when the latter is moved by an operator from one position to another, for example from a warehouse to a working plane 2; or when said movable element 24ₖ undergoes a shock from the working head 32 of the working unit 3 during machining.

Said accelerometer 243ₖ is configured to detect at least one acceleration value of said movable element (24_{a,b,...,k,...n}) along at least one axis of the Cartesian reference system X,Y,Z.

In the present embodiment said accelerometer 243ₖ is of the triaxial type, i.e. a device configured to acquire acceleration values of the movable element 24ₖ along the X, Y, and Z axes of the Cartesian reference system.

However, without departing from the scope of protection of the present invention, the typology of said accelerometer 243ₖ may be different than described. In another embodiment of the present invention, said detection unit Dₖ may include an accelerometer and a gyroscope.

The first microcontroller 244ₖ is configured to receive acceleration data from the accelerometer 243ₖ.

Also, the first microcontroller 244ₖ is configured to transmit acceleration data received from the accelerometer 243ₖ towards the control logic unit U or towards further devices (not shown in the figures) that can be used by the user.

In the embodiment being described, the first microcontroller 244ₖ is a wireless or radio frequency microcontroller.

However, in other embodiments, the number and type of said first microcontroller 244ₖ may be different from what is described, without thereby departing from the scope of protection of the present invention.

Also, the first microcontroller 244ₖ is configured to compare the acceleration value of said movable element 24ₖ detected with a reference acceleration threshold S1, stored in the storage means 248ₖ, to verify that the movable element 24ₖ has been moved.

In addition, the first microcontroller 244ₖ is configured to predefine a reference direction parallel to the gravitational acceleration vector g.

By predefined reference direction, it is meant a reference direction in which the movable element 24ₖ is oriented in such a way as to correctly block the piece during the execution of the specific machining.

In addition, the first microcontroller 244ₖ is configured to detect an acceleration value of said movable element 24_{a,b,...,k,...n} along this predefined reference direction.

The first microcontroller 244ₖ is then configured to compare said acceleration value detected by said movable element 24_{a,b,...,k,...n} along said reference direction with the value of gravitational acceleration g, in order to determine whether said movable element 24_{a,b,...,k,...n} is oriented correctly for the specific working.

In the present embodiment, the movable elements 24ₖ positioned on the support bars 21_{a,b,...,k,...n} of the working center C have the same orientation defined by the predefined reference direction. However, in other embodiments, the orientation of said movable elements 24ₖ may be different from what is described, without thereby departing from the scope of protection of the present invention.

In particular, as will be better described later on, if the acceleration value detected by said movable element 24_{a,b,...,k,...n} along said reference direction is different from said gravity acceleration value g, the movable element 24ₖ remains in a rest position, in which the movable element 24ₖ is in a power saving configuration. In fact, only the accelerometer 243ₖ and the first microcontroller 244ₖ are active but in standby or power-saving mode.

If, on the other hand, the detected acceleration value of said movable element 24_{a,b,...,k,...n} along said reference direction is substantially equal to said gravitational acceleration value g, the acquisition device 245ₖ activates for a predetermined time interval necessary to acquire at least one image and/or video, which will subsequently be processed, as described below.

In another embodiment of the present invention, the first microcontroller 244ₖ is further configured to compare the acceleration values acquired by the accelerometer 243ₖ during the machining with a reference acceleration threshold S2, stored in the storage means 248ₖ and specific for such process.

If the acceleration value detected by the accelerometer 243ₖ exceeds this reference acceleration threshold S2, the first microcontroller 244ₖ detects an anomaly and sends a command signal to the control logic unit U to interrupt the machining and/or sends an acoustic and/or sound alarm signal to the operator.

In particular, the events that can cause the reference acceleration threshold S2 to be exceeded and, therefore, the generation of an anomaly, include:
- a collision between a working head (not shown in the figures) and a movable element 24ₖ;
- an incorrect setting of the working head parameters (for example, the advancement speed of a working tool or the rotation speed of the working tool are set with values other than those foreseen for the specific machining operation);
- incorrect assembly of the working tool (not shown in the figures);
- an assembly of a worn-out working tool;
- failure to assemble the working tool in the working head; and
- failure to block the panel on the moving elements 24_{a,b,...k,...n} due, for example, to incorrect positioning of the panel by the operator or to a malfunction of the vacuum system of the working center C.

If, on the other hand, the acceleration value detected by the accelerometer 243ₖ does not exceed this reference acceleration threshold S2, the first microcontroller 244ₖ does not detect any anomaly. In this case, the machining continues without interruption.

In a further embodiment of the present invention, the first microcontroller 244ₖ is further configured to compare the acceleration data acquired by the accelerometer 243ₖ during machining with a further reference acceleration threshold S3, stored in the storage means 248ₖ, to verify that this machining has actually been carried out.

If the acceleration value detected by the accelerometer 243ₖ exceeds this further reference acceleration threshold S3, the first microcontroller 244ₖ detects that the machining has not been carried out and sends an audio and/or acoustic alarm signal to the operator. In fact, for example, it may happen that, due to an anomaly in the working head, the machining is not carried out.

If, on the other hand, the acceleration value detected by the accelerometer 243ₖ does not exceed this further reference acceleration threshold S3, the first microcontroller 244ₖ detects that the machining has been carried out correctly. Also, the first microcontroller 244ₖ determines the beginning and the end of the same machining.

The acquisition device 245ₖ is configured to acquire images and/or videos. In the embodiment described, the acquisition device 245ₖ is a camera.

However, in other embodiments, the number and type of said acquisition device 245ₖ may be different from what is described, without thereby departing from the scope of protection of the present invention. By way of example, this acquisition can be carried out using one or more video cameras that may be connected to each other.

The second microcontroller 246ₖ is configured to receive the images and/or videos from the acquisition device 245ₖ.

Also, the second microcontroller 246ₖ is configured to transmit the images and/or videos received from the acquisition device 245ₖ to the first microcontroller 244ₖ.

In particular, as will be better described later, the second microcontroller 246ₖ is configured to decode, by means of a decoding algorithm, said image and/or video acquired by the acquisition device 245ₖ to check for a code 42ₖ arranged on the respective support bar 21ₖ so as to detect a position value of the movable element 24ₖ associated with the corresponding code 42ₖ.

In addition, the first microcontroller 244ₖ is further configured to transmit the images and/or videos received from the second microcontroller 246ₖ towards the control logic unit U or towards the further devices (not shown in the figures), which can be used by the user.

In one embodiment of the present invention, the images and/or videos captured by the acquisition device 245ₖ are not transmitted to the control logic unit U or to the further devices that can be used by the user but are processed by said second microcontroller 246ₖ.

As can be seen in particular from figure 3B, the first light source 247ₖ is housed in a respective seat obtained on the end of said main body 240ₖ.

In particular, said first light source 247ₖ, operatively connected to said acquisition device 245ₖ and to said second microcontroller 246ₖ, is able to activate itself to illuminate the second 42k code arranged on the respective support bar 21ₖ for the time interval necessary for the acquisition device 245ₖ to acquire at least one image and/or video.

In one embodiment of the present invention, said first light source 247ₖ is activated directly by said acquisition device 245ₖ, which synchronizes the flash of said first light source 247ₖ with the instant of acquisition of said at least one image and/or video.

Similarly, the second light source 247'ₖ is housed in a respective seat obtained at one end of said main body 240ₖ.

In particular, said second light source 247'ₖ, operatively connected to said accelerometer 243ₖ and to said first microcontroller 244ₖ, is able to activate itself to guide the operator so as to allow the correct positioning of the movable element 24ₖ on the respective bar 21ₖ.

In the embodiment that is described, said first light source 247ₖ is an first LED 247ₖ and said second light source 247'ₖ is a second LED 247'ₖ. However, in other embodiments of the present invention, the number and type of said light sources 247ₖ, 247'ₖ may be different from what is described, without thereby departing from the scope of protection of the present invention.

Storage media 248ₖ comprise, for example, a database, and are configured to memorize the acceleration values acquired by said accelerometer 243ₖ, the data acquired by said acquisition device 245ₖ, and the reference thresholds S1, S2, and S3.

In one embodiment of the present invention, said storage means 248ₖ can be included in said first microcontroller 244ₖ or in said second microcontroller 244ₖ.

As can be seen from figure 4, the supply means 249ₖ such as, for example, rechargeable batteries or accumulators, are connected to said accelerometer 243ₖ, to said first microcontroller 244ₖ, to said data acquisition device 245ₖ, to said second microcontroller 246ₖ, to said first light source 247ₖ, and to said second light source 247'ₖ so as to supply them.

The control logic unit U keeps in its memory the configurations of the working plane 2 necessary to carry out the workings on the pieces to be machined and activates the components of the working center C according to the different workings to be carried out.

By configurations of the working plane 2 it is meant the exact arrangement of said plurality of support bars 21_{a,b,...,k,...n} along said base 1 is the exact arrangement of said plurality of movable elements 24_{a,b,...,k,...n} along the respective support bars 21_{a,b,...,k,...n}.

In the present embodiment, the control logic unit U comprises receiving and transmitting module a in wireless mode.

In one embodiment, the control logic unit U is capable of receiving command signals from the first microcontroller 244k to stop machining.

With reference to figure 2, the measurement system 4 comprises a first code 41 and a plurality of second codes 42_{a,b,...k,...n}.

The first code 41 comprises a plurality of signs, suitably combined, so as to contain coded information. In an embodiment of the present invention, said first code 41 is a QR-code type, a barcode, or other codes capable of being detected by an optical sensor and the like.

In particular, said first code 41 is mainly used to identify the exact position, expressed in millimeters, of each support bar 21ₖ along said base 1.

In fact, each support bar 2ₖ of said plurality of support bars 21_{a,b,...,k,...n} is provided with at least one sensor (not shown in the figures) capable of reading said first code 41.

Each code 42ₖ of said plurality of second codes 42_{a,b,...k,...n} is arranged on a respective support bar 21ₖ and has the same structure as said first code 41. In one embodiment of the present invention, each code 42ₖ it is a OR-code type, a barcode, or further codes capable of being detected by an optical sensor and the like.

In particular, each second code 42ₖ is used to mainly identify the exact position of each moving element 24ₖ along the respective support bar 21ₖ, on which the movable element 24ₖ is mounted.

The operation of the movable element 24ₖ described above is as follows.

Each movable element 24ₖ is capable of passing from a rest position, in which it is in an energy-saving configuration, to an operating position, in which it is in an active configuration, based on said comparison between said at least one acceleration value detected and said reference acceleration threshold S1.

In particular, when the movable element 24ₖ is in the rest position and, therefore, in energy saving configuration:
- the accelerometer 243ₖ does not detect any movement of the movable element 24ₖ or it detects a movement of the movable element 24ₖ but the orientation of the movable element 24ₖ is not equal to the orientation defined by the default reference direction (the accelerometer 243ₖ is active but in standby or energy saving mode);
- the first microcontroller 244ₖ is active but in standby or power saving mode;
- the acquisition device 245ₖ is not active;
- the second microcontroller 246ₖ is not active; and
- the first light sources 247ₖ and the second light sources 247'ₖ are not active.

Therefore, when the movable element 24ₖ is in the rest position, the accelerometer 243k and the first microcontroller 244ₖ are in a standby or power-saving configuration, where their power consumption is minimal.

When, on the other hand, the movable element 24ₖ is in operating position, all its components are active:
- the accelerometer 243ₖ detects a movement of the movable element 24ₖ and the orientation of the movable element 24ₖ is equal to the orientation defined by the default reference direction (active mode);
- the first microcontroller 244ₖ is active and receives acceleration data and rotational data from the accelerometer 243ₖ;
- the acquisition device 245ₖ is active for a predetermined time interval necessary to acquire at least one image and/or video;
- the second microcontroller 246ₖ is active for a predetermined time interval necessary to process (for example by means of a decoding algorithm) said image and/or said video acquired by the acquisition device 245ₖ in order to verify the presence of the code 42ₖ and to transmit said image and/or said video received by the acquisition device 245ₖ to the first microcontroller 244ₖ;
- the first light sources 247ₖ they are active for the time interval necessary for the acquisition device 245ₖ to acquire at least one image and/or video (typically a few milliseconds);
- the second light sources 247'ₖ are active during the positioning of the movable element 24ₖ on the respective bar 21ₖ; and
- the supply means 249ₖ are active and supply the components of the movable element 24ₖ to which they are connected.

The operation of method 5 to detect at least one movement and one orientation of said movable element 24ₖ perfected with respect to said working center C in as follows.

Initially, the movable element 24ₖ is positioned on the respective support bar 21ₖ and is in the rest position.

In particular, the accelerometer 243ₖ does not detect any movement of the movable element 24ₖ but is active (standby mode) while the first microcontroller 244ₖ is active (standby mode) but does not receive any data from the accelerometer 243ₖ. Therefore the movable element 24ₖ is in energy saving configuration.

The operator or a robot moves said movable element 24ₖ to place it on another part of the same support bar 21ₖ, on another support bar 21ₙ, or to transport said movable element 24ₖ in a tool magazine.

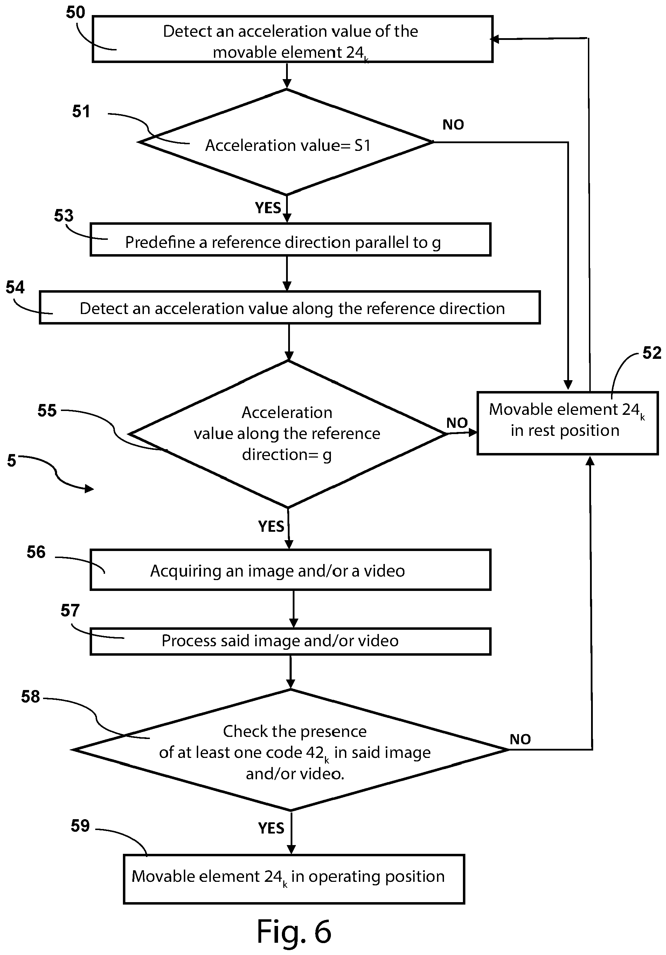

With reference to figure 6, in step 50, the accelerometer 243ₖ detects at least one acceleration value along at least one axis of a Cartesian reference triad X,Y, Z.

The first microcontroller 244ₖ therefore, receives said at least one acceleration value from the accelerometer 243ₖ.

Then, in step 51, the first microcontroller 244ₖ compares said at least one acceleration value detected in step 50 with a reference acceleration threshold S1 to verify that the movable element 24ₖ was moved.

Therefore, if the acceleration value is different from said reference acceleration threshold S1, the movable element 24ₖ is kept in the energy saving configuration (step 52), i.e. not all the electronic components of the movable element 24_{a,b,...,k,...n} are activated but only the accelerometer 243ₖ and the first microcontroller 244ₖ are active (in standby mode).

In more detail, if the acceleration value detected in step 50 is different from the reference acceleration threshold S1, this means that only a vibration of the movable element 24ₖ has been detected and not a movement of the movable element 24ₖ.

If, on the other hand, the acceleration value is substantially equal to said reference acceleration threshold S1, the first microcontroller 244ₖ predefines (step 53) a reference direction parallel to the gravitational acceleration vector g.

Subsequently, in step 54, the accelerometer 243ₖ detects an acceleration value of said movable element 24ₖ along this predefined reference direction.

Later, the first microcontroller 244ₖ compares said acceleration value detected by said movable element 24ₖ along said reference direction with the value of the gravitational acceleration g.

If the acceleration value detected in step 54 is different from the gravity acceleration value g, this means that the orientation of the movable element 24ₖ is not the orientation defined by the default reference direction, i.e. it is not the correct orientation for the specific machining to be performed.

If, on the other hand, the acceleration value detected in step 54 is substantially equal to the value of gravity acceleration g, this means that the orientation of the movable element 24ₖ is the orientation defined by the default reference direction, and, therefore, the acquisition device 245ₖ activates for a predetermined time interval necessary to acquire at least one image and/or video (step 56).

Also, the first light source 247ₖ activates to illuminate the second code 42ₖ arranged on the respective support bar 21ₖ for the time interval necessary for the acquisition device 245ₖ to acquire at least one image and/or video.

More specifically, the first microcontroller 244ₖ sends a command signal to the second microcontroller 246ₖ to activate the acquisition device 245ₖ and the first light source 247ₖ.

In step 57, the second microcontroller 246ₖ activates for a predetermined time interval necessary to process said image and/or said video acquired by the acquisition device 245ₖ.

In more detail, the second microcontroller 246k decodes said image and/or video acquired by the acquisition device 245ₖ.

In step 58, the second microcontroller 246ₖ checks for a code 42ₖ arranged on the respective support bar 21ₖ, so as to detect a position value of the movable element 24ₖ associated with the corresponding code 42ₖ.

If the second microcontroller 246ₖ does not detect any code 42ₖ in said image and/or video, the movable element 24ₖ is maintained in the energy-saving configuration (step 52).

If, on the other hand, the second microcontroller 246ₖ detects the presence of code 42ₖ in said image and/or video, and therefore the position of the movable element 24ₖ on the respective bar 21ₖ, the movable element 24ₖ switches its state from the energy-saving configuration to the active configuration (step 59).

In particular, the first microcontroller 244ₖ sends a command signal to activate the second light source 247'ₖ, so as to guide the operator in the correct positioning of the movable element 24ₖ on the respective bar 21ₖ for the specific machining, based on the detected code 42ₖ.

Therefore, the verification step 58 makes it possible to exclude the so-called "false positives", i.e. the cases in which the orientation of the movable element 24ₖ corresponds to the orientation of a movable element 24ₖ positioned on the support bars 21_{a,b,...,k,...n} of the working center C but the movable element 24ₖ is not on working plane 2 of the working center C.

In more detail, the verification step 58 allows excluding the cases in which the same acceleration of the movable element 24ₖ is detected with respect to the predefined reference direction although the movable element 24ₖ is in another position such as, for example, inside a tool magazine or on top of a storage trolley.

### Advantages

A first advantage of the movable element for clamping pieces to be machined, improved to detect at least its movement and its orientation with respect to a working center for machining pieces according to the present invention is that of reducing the energy consumption of the components, including in the movable element, thus increasing the life cycle of the same components.

A further advantage of the movable element for clamping pieces to be machined, improved to detect at least its movement and its orientation with respect to a working center for machining pieces according to the present invention is that of verifying that the movement values detected do not exceed a predetermined threshold so as to prevent any breakages or malfunctions of the improved movable element.

Another advantage of the movable element for clamping pieces to be machined, improved to detect at least its movement and its orientation with respect to a working center for machining pieces according to the present invention is that of verifying that the movement values detected exceeds a further predetermined threshold to verify that machining has actually been carried out, determining the start and end of this machining.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Movable element (24_{a,b,...,k,...n}) for blocking workpieces, couplable to a working plane (2) comprised in a working center (C) for working pieces made of wood, ceramic, plastic, glass, fiberglass,
**characterized in that** it comprises a detecting and processing unit (D_{a,b,...,k,...n}) configured for:
- detecting at least one acceleration value of said movable element (24_{a,b,...,k,...n}) along at least one axis of a Cartesian reference tern (X,Y, Z); and
- comparing said at least one acceleration value with a reference acceleration threshold (S1).

2. Movable element (24_{a,b,...,k,...n}) for blocking workpieces according to the preceding claim,
wherein said movable element (24_{a,b,...,k,...n}) is couplable to a working plane (2) sliding on a respective supporting bar (21_{a,b,...,k,...n}),
wherein said movable element (24_{a,b,...,k,...n}) is capable of switching from an energy-saving configuration to an active configuration, based on said comparison between said at least one acceleration value and said reference acceleration threshold (S1).

3. Movable element (24_{a,b,...,k,...n}) for blocking workpieces according to the preceding claim,
wherein said detecting and processing unit (D_{a,b,...,k,...n}) is configured for:
- predefining a reference direction parallel to the gravity acceleration vector(g);
- detecting an acceleration value of said movable element (24_{a,b,...,k,...n}) along said predefined reference direction;
- comparing said detected acceleration value of said movable element (24_{a,b,...,k,...n}) along said reference direction with the gravity acceleration value(g)
if said acceleration value of said movable element (24_{a,b,...,k,...n}) along said predefined reference direction is different from said gravity acceleration value (g), maintaining said movable element (24_{a,b,...,k,...n}) in said energy-saving configuration,
if said acceleration value of said movable element (24_{a,b,...,k,...n}) along said predefined reference direction is substantially equal to said gravity acceleration value (g),
detecting at least one image and/or video,
processing said at least one image and/or video,
verifying the presence of said code (42_{a,b,...,k,...n}) in said processed image and/or video, so that
if said code (42_{a,b,...,k,...n}) is not detected in said image and/or video, maintaining said movable element (24_{a,b,...,k,...n}) in said energy-saving configuration,
if said code (42_{a,b,...,k,...n}) is detected in said image and/or video, switching the state of said movable element (24_{a,b,...,k,...n}) from said energy-saving configuration to said active configuration.

4. Movable element (24_{a,b,...,k,...n}) for blocking workpieces according to any one of the preceding claims, **characterized in that** said detecting and processing unit (D_{a,b,...,k,...n}) comprises:
an accelerometer (243_{a,b,...,k,...n}) for detecting said at least one acceleration value of said movable element (24_{a,b,...,k,...n});
a first microcontroller (244_{a,b,...,k,...n}), connected to said accelerometer (243_{a,b,...,k,...n}) and configured for
determining the acceleration of said movable element (24_{a,b,...,k,...n}) based on said at least one acceleration value received from said accelerometer (243_{a,b,...,k,...n}),
determining the orientation of said movable element (24_{a,b,...,k,...n}) based on said acceleration value of said movable element (24_{a,b,...,k,...n}) along said predefined reference direction.

5. Movable element (24a,b,...,k,...n) for blocking workpieces according to any one of the preceding claims, **characterized in that** said detecting and processing unit (D_{a,b,...,k,...n}) comprises
a data acquisition device (245_{a,b,...,k,...n}) for acquiring said at least one image and/or video;
a second microcontroller (246_{a,b,...,k,...n}), connected to said data acquisition device (245_{a,b,...,k,...n}), for processing said at least one image and/or video, and for checking the presence of at least one code (42_{a,b,...,k,...n}) in said processed image and/or video, so as to maintain said movable element (24_{a,b,...,k,...n}) in said energy-saving configuration or to switch the state of said movable element (24_{a,b,...,k,...n}) from said energy-saving configuration to said active configuration based on said check.

6. Movable element (24_{a,b,...,k,...n}) for blocking workpieces according to any one of the preceding claims, **characterized in that** detecting and processing unit (D_{a,b,...,k,...n}) comprises a first light source (247_{a,b,...,k,...n}), operatively connected to said data acquisition device (245_{a,b,...,k,...n}) and to said second microcontroller (246_{a,b,...,k,...n}), wherein said first light source (247_{a,b,...,k,...n}) is capable of lighting said second code (42_{a,b,...,k,...n}) arranged on the respective supporting bar (21_{a,b,...,k,...n}) for the time period necessary for said data detection device (245_{a,b,...,k,...n}) for detecting said at least one image and/or video.

7. Movable element (24_{a,b,...,k,...n}) for blocking workpieces according to any one of the preceding claims, **characterized in that** said detecting and processing unit (D_{a,b,...,k,...n}) comprises a second light source (247'_{a,b,...,k,...n}), operatively connected to said accelerometer device (243_{a,b,...,k,...n}) and to said first microcontroller (244_{a,b,...,k,...n}), wherein said second light source (247'_{a,b,...,k,...n}) is capable of being activated to guide the operator in positioning the movable element (24_{a,b,...,k,...n}) on the respective second light source bar (21_{a,b,...,k,...n}).

8. Movable element (24_{a,b,...,k,...n}) for blocking workpieces according to any one of claims 4-7, **characterized in that** said accelerometer (243_{a,b,...,k,...n}) is a triaxial accelerometer.

9. Movable element (24_{a,b,...,k,...n}) for blocking workpieces according to any one of the preceding claims, **characterized in that** it comprises a main body (240_{a,b,...,k,...n}) having a supporting surface (241_{a,b,...,k,...n}), on which said workpiece can be placed, and a resting surface (242_{a,b,...,k,...n}), intended to be placed on the supporting bar (21_{a,b,...,k,...n}).

10. Movable element (24_{a,b,...,k,...n}) for blocking workpieces according to any one of the preceding claims, **characterized in that** said first microcontroller (244_{a,b,...,k,...n}) is configured to compare said at least one acceleration value detected by said accelerometer (243_{a,b,...,k,...n}) during the operation, with a reference acceleration threshold (S2), such that
if said at least one acceleration value detected by said accelerometer (243_{a,b,...,k,...n}) exceeds said reference acceleration threshold (S2), said first microcontroller (244_{a,b,...,k,...n}) detects an anomaly and sends a command signal to a control logic unit (U) of said working center (C) to interrupt said operation and/or sends an acoustic and/or sound alarm signal to the operator, or
if said at least one acceleration detected value by said accelerometer (243_{a,b,...,k,...n}) does not exceed said reference acceleration threshold (S2), said first microcontroller (244_{a,b,...,k,...n}) does not detect any anomaly.

11. Movable element (24_{a,b,...,k,...n}) for blocking workpieces according to any one of the preceding claims, **characterized in that** said first microcontroller (244_{a,b,...,k,...n}) is configured for comparing said at least one acceleration value detected by said accelerometer (243_{a,b,...,k,...n}) during said operation, with a reference acceleration threshold (S3), such that
if said at least one acceleration value detected by said accelerometer (243_{a,b,...,k,...n}) exceeds said reference acceleration threshold (S3), said first microcontroller (244_{a,b,...,k,...n}) detects that said operation has not been performed and sends an acoustic and/or sound alarm signal to the operator, or
if said at least one acceleration value detected by said accelerometer (243_{a,b,...,k,...n}) does not exceed said reference acceleration threshold (S3), said first microcontroller (244_{a,b,...,k,...n}) detects that said operation has been correctly performed and determines the beginning and the end of said operation.

12. Movable element (24_{a,b,...,k,...n}) for blocking workpieces according to any one of the preceding claims, **characterized in that** said detecting and processing unit (D_{a,b,...,k,...n}) comprises storage means (248_{a,b,...,k,...n}) as a database, and are configured for storing acceleration values detected by said accelerometer (243_{a,b,...,k,...n}), data detected by said acquisition device (245_{a,b,...,k,...n}) and said reference thresholds (S1, S2, S3).

13. Working center (C) for working workpieces made of wood, ceramic, plastic, glass, fibreglass, comprising:
- a base (1) for supporting said working center (C);
- a working unit (3) comprising at least one working head (32) supporting at least one working tool;
- a working plane (2), coupled to said base (1), for supporting the workpieces,
- a control logic unit (U) for the operation of said working center (C), in which are stored configurations of said working plane (2) for working said workpieces;
said working center (C) being **characterized in that** said worktable (2) comprises a plurality of movable elements (24_{a,b,...,k,...n}) for blocking workpieces according to any one of claims 1-12.

14. Method (5) for detecting at least one movement and orientation of a movable element (24_{a,b,...,k,...n} for blocking workpieces comprised in a working center (C) for working piece made of wood, ceramic, plastic, glass, fibreglass, wherein said movable element (24_{a,b,...,k,...n}) comprises a detecting and processing unit (D_{a,b,...,k,...n}), wherein said method (5) comprise the following steps:
- detecting (50), by means of said detecting and processing unit (D_{a,b,...,k,...n}), at least one acceleration value of said movable element (24_{a,b,...,k,...n}) along at least one axis of a Cartesian reference tern (X,Y,Z); and
- comparing (51), by means of said detecting and processing unit (D_{a,b,...,k,...n}), said at least one acceleration value with a reference acceleration threshold (S0).

15. Method (5) according to the preceding claim, comprising the following further steps:
- predefining (53), by means of said detection and processing unit (D_{a,b,...,k,...n}), a reference direction parallel to the gravity acceleration vector (g);
- detecting (54), by means of said detection and processing unit (D_{a,b,...,k,...n}), an acceleration value of said movable element (24_{a,b,...,k,...n}) along said predefined reference direction;
- comparing (55), by means of said detection and processing unit (D_{a,b,...,k,...n}), said detected acceleration value of said movable element (24_{a,b,...,k,...n}) along said predefined reference direction with the gravity acceleration value (g)
if said acceleration value of said movable element (24_{a,b,...,k,...n}) along said predefined reference direction is different from said gravity acceleration value (g), maintaining said movable element (24_{a,b,...,k,...n}) in said energy-saving configuration,
if said acceleration value of said movable element (24_{a,b,...,k,...n}) along said predefined reference direction is substantially equal to said gravity acceleration value (g)
detecting at least one image and/or video,
processing said at least one image and/or video,
checking the presence of said code (42_{a,b,...,k,...n}) in said processed image and/or video, such that
if said code (42_{a,b,...,k,...n}) is not detected in said image and/or video, maintain said movable element (24_{a,b,...,k,...n}) in said energy-saving configuration,
if said code (42_{a,b,...,k,...n}) is detected in said image and/or video, switching the state of said movable element (24_{a,b,...,k,...n}) from said energy-saving configuration to said active configuration.
